# EUROPÄISCHE PATENTSCHRIFT

(11) **EP 0 941 531 B1**
(45) Veröffentlichungstag und Bekanntmachung des Hinweises auf die Patenterteilung: **02.04.2003**
(21) Anmeldenummer: 97953697.6
(22) Anmeldetag: 25.11.1997
(51) Int. Cl.: G08B 13/24

(54) **DIEBSTAHLSICHERUNGS-SYSTEM, INSBESONDERE FÜR TEXTILIEN, LEDERWAREN OD. DGL.**
ANTI-THEFT SYSTEM, SPECIALLY FOR TEXTILES, LEATHER GOODS AND THE LIKE
SYSTEME ANTIVOL, NOTAMMENT POUR TEXTILES, CUIRS, OU SIMILAIRE

(30) Priorität: 26.11.1996 DE 19648883
(43) Veröffentlichungstag der Anmeldung: 15.09.1999
(73) Patentinhaber: August Bünger Bob-Textilwerk GmbH & Co. KG, 42277 Wuppertal (DE)
(72) Erfinder: BÜNGER, Claus, Michael, D-42107 Wuppertal (DE)
(74) Vertreter: Mentzel, Norbert, Dipl.-Phys.
(86) Internationale Anmeldenummer: EP9706569
(87) Internationale Veröffentlichungsnummer: WO98024076

(56) Entgegenhaltungen:
- EP-A- 0 280 361
- EP-A- 0 616 304
- EP-A- 0 807 912
- GB-A- 2 211 702

## Beschreibung

Die Erfindung richtet sich auf ein Diebstahlsicherungs-System der im Oberbegriff des Anspruches 1 genannten Art. Bei einem solchen Diebstahlsicherungs-System wird ein Alarmauslöser wie ein Transponder oder ein Magnetstreifen an einer Ware angebracht. Wird die so gesicherte Ware an einem Detektor vorbeigeführt ohne den Alarmauslöser vorher zu entfernen oder ihn vorher zu entsichern, dann löst der Detektor einen Alarm aus.

Bei Alarmauslösern der oben genannten Art gehört es zum Stand der Technik, einen elektrischen Schwingkreis in Form einer flächig ausgeführten Leiterbahnenanordnung in Spulenform auf einem Träger aufzubringen. Dabei werden zum Teil zwei ähnlich aufgebaute Schichten von Leiterbahnen, getrennt durch eine isolierende Zwischenschicht so angeordnet, daß die durch die schichtförmige Struktur der Leiterbahnen hervorgerufene Kapazität direkt als Schwingkreiskapazität genutzt werden kann. Die Schwingkreisinduktivität hingegen wird durch die Spulenform der zwei Leiterbahnenschichten gewährleistet. Beim Durchgang eines derartigen Alarmauslösers durch ein Magnetfeld, das auch von einem elektromagnetischen Wechselfeld herrühren kann, wird in den Leiterbahnen zunächst eine Spannung induziert, welche einen Stromfluß zufolge hat, und wodurch der Schwingkreis angeregt wird. Hierdurch wird ein elektromagnetisches Wechselfeld erzeugt, dessen Charakteristika von den Kennwerten des Schwingkreises abhängen. Dieses Wechselfeld kann von einem Detektor wahrgenommen werden, was zur Auslösung des Alarms führen kann.

Ein derartiges Alarmauslösesystem wird etwa in GB 22 11 702 A offenbart. Die beiden flächigen Spulen, die in zwei Ebenen übereinander angeordnet sind, sind an einer Seite elektrisch leitend miteinander verbunden. Die durchgehende Gesamtlänge der Antenne ist damit auf die Summe der Längen der beiden Teilbereiche beschränkt.

EP 0 280 361 offenbart ein ähnliches System, wobei jedoch eine elektrisch leitende Verbindung der beiden in zwei verschiedenen, parallelen Ebenen angeordneten Spulen ausdrücklich unterbleibt. Vielmehr sind die beiden Teilbereiche rein kapazitiv gekoppelt. Zur Erhöhung der Kapazität sind die Endbereiche jeder der beiden Leiterbahnen plattenförmig ausgeführt und sind im Montagezustand derart angeordnet, daß diese Platten den Platten der Leiterbahn in der jeweils anderen Ebene gegenüberliegen, so daß ein Plattenkondensator mit verhältnismäßig großer Fläche entsteht. Auch hier ist die Ausdehnung der Anordnung im Wesentlichen 2-dimensional und die durchgehende Gesamtlänge der Antennenanordnung auf die Längen jeweils einer Leiterbahn beschränkt.

Bei einer zweiten Art von Alarmauslösern ist die Antenne in Form eines magnetisierbaren oder auch eines dauer-magnetischen Streifens auf ein Klebe-Etikett aufgebracht. Bei der magnetisierbaren Ausführungsform ist es so, daß der Alarmauslöser vor der Austellung der Ware magnetisiert werden muß, und er erst bei einem Verkauf der Ware wieder entmagnetisiert wird.
Beiden Alarmauslösern diesen Typs ist gemeinsam, daß das von einem solchen Streifen ausgehende schwache Magnetfeld von einem im Ausgangsbereich befindlichen Detektor sensiert wird wenn eine mit einem solchen Etikett gesicherte Ware an ihm vorbeigeführt wird. Der Detektor löst daraufhin einen Alarm aus.

Von Nachteil bei solchen, bekannten, Alarmauslösern ist zum einen die geringe Reichweite, innerhalb derer die Alarmauslöser detektierbar sind, und zum anderen die Nichtdetektierbarkeit der Alarmauslöser, wenn diese in einem ungünstigen Winkel am Detektor vorbeigeführt werden.

Aufgabe der Erfindung ist es, ein System der im Oberbegriff des Anspruches 1 genannten Art zu entwickeln, das die obengenannten Nachteile vermeidet.

Dieses wird durch die im Kennzeichen des Anspruchs 1 genannten Maßnahmen erreicht. Danach ist es sinnvoll, die Antenne in mehreren Ebenen anzuordnen und aus vielen, mindestens aber drei Abschnitten aufzubauen, um so die maximale Länge der Antenne zu steigern, und die Reichweite innerhalb derer der Alarmauslöser noch detektierbar ist zu vergrößern. Unter "Abschnitt" sei hier und im folgenden, insbesondere in den Ansprüchen, ein Teil der Gesamtleiterbahn verstanden, welcher vollständig in nur einer Ebene liegt und mit keinem weiteren Abschnitt dieser Ebene durch eine elektrisch leitende Verbindung, die ausschließlich in dieser Ebene liegt, verbunden ist. Nach dieser Definition können ein oder mehrere Abschnitte in einer Ebene liegen, wobei sie in letzterem Fall über weitere Abschnitte in anderen Ebenen elektrisch leitend miteinander verbunden sein können. Erfindungsgemäß werden dabei einzelne Abschnitte der Antenne auf mehrere Träger, die einander flächig überdecken, verteilt. Die einzelnen Antennenabschnitte sind an ihren Enden im Einklang mit der oben genannten Definition miteinander verbunden, so daß sich ein fortlaufender Antennenstrang ergibt, der summativ eine große Gesamtlänge aufweist.
Ein weiterer Effekt hierbei ist der, daß die Spule, die sich aus der Anordnung der Antennenabschnitte ergeben kann, eine dreidimensionale Ausdehnung hat. Durch diese dreidimensionale Ausdehnung kann der Alarmauslöser nun auch dann detektiert werden, wenn er in einem ungünstigen Winkel zum Detektor ausgerichtet ist.

Nach Anspruch 2 kann es weiterhin von Vorteil sein, wenn die einzelnen Antennenabschnitte über Durchbrüche in den einzelnen Trägern miteinander in Verbindung stehen.
Nach Anspruch 3 kann es von Vorteil sein, daß die Antenne mit einem weiteren Alarmauslöserbauteil, wie z.B. einem Kondensator, zusammenwirkt, so daß sich ein elektrischer Schwingkreis ergibt.

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Es zeigen:
- Fig. 1: schematisch ein erstes Ausführungsbeispiel eines Alarmauslösers in Aufsicht.
- Fig. 2: schematisch ein zweites Ausführungsbeispiel eines Alarmauslösers in Aufsicht.
- Fig. 3: schematisch ein drittes Ausführungsbeispiel eines Alarmauslösers in Explosionszeichnung.

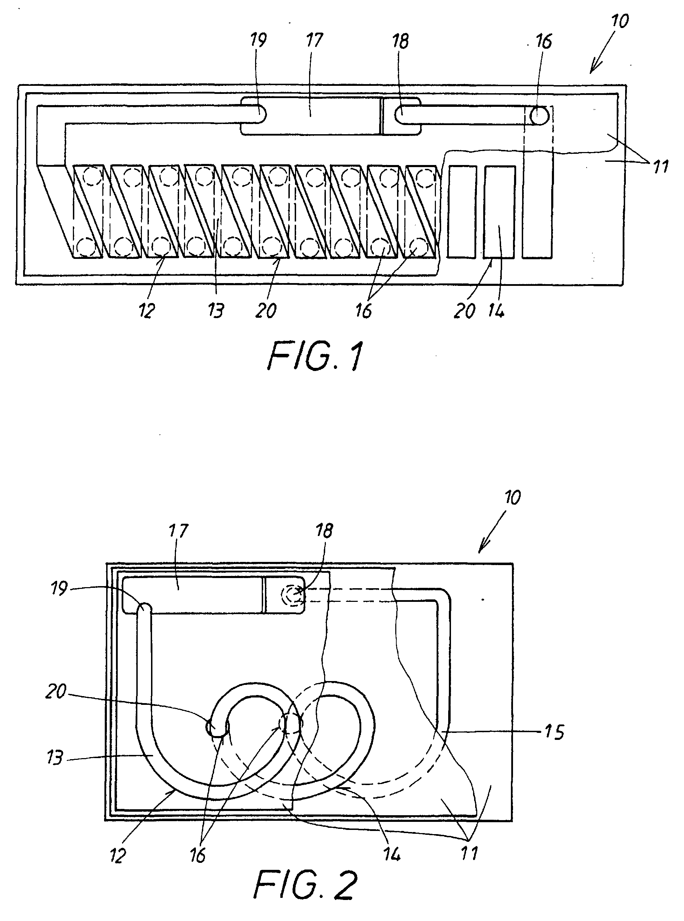

In Fig. 1. ist ein erstes Ausführungsbeispiel der Erfindung dargestellt. Der dort dargestellte Alarmauslöser 10 oder Transponder, besitzt eine obere und eine untere isolierende Trägerschicht 11, auf denen jeweils Antennenabschnitte 13, 14 aufgebracht sind. Die Antennenabschnitte 13 der ersten Lage sind an ihren Enden 20 jeweils leitend mit den Enden 20 der jeweils gegenüberliegenden Antennenabschnitte 14 der zweiten Lage verbunden. Die Verbindung erfolgt dabei durch Durchbrüche 16, die in der oberen Trägerschicht 11 angeordnet sind. Die einzelnen Antennenabschnitte 13, 14 sind nach Art einer Kette miteinander verbunden, so daß sich summativ eine durchgehende Antennenbahn 12 ergibt. Die Enden der Antennenbahn 12 sind in diesem Ausführungsbeispiel an den Anschlußpunkten 18, 19 an einen Kondensator 17 angeschlossen. Im Einsatzfall befindet sich der Alarmauslöser 10 versteckt an einer Ware angebracht. Der Schwingkreis kann, durch ein von außen einwirkendes elektromagnetisches Wechselfeld, angeregt werden und selber ein elektromagnetisches Feld aufbauen. Diese Anregung erfolgt beim Durchgang eines Alarmauslösers 10 durch eine Detektorschranke. Der Alarm wird dann dadurch ausgelöst, daß das vom Alarmauslöser ausgehende elektromagnetische Feld durch den Detektor sensiert wird. Eine durch einen Alarmauslöser 10 gesicherte Ware kann nur durch ein Entfernen oder Zerstören des Alarmauslösers 10 wieder entsichert werden.
Der erfindungsgemäße Alarmauslöser 10 mit der Antennenbahn 12 weist im Vergleich zu Alarmauslösern mit nur einer, in einer Ebene angeordneten Spule eine größere Länge der Antenne auf, und somit eine bessere Detektierbarkeit. Außerdem ist die Detektierbarkeit dadurch verbessert, daß die, sich aus der Anordnung der Antennenabschnitte 13, 14 ergebende Spule, eine räumliche, 3-dimensionale Ausdehnung hat. Diese 3-dimensionale Ausdehnung bewirkt, daß der Alarmauslöser 10 in jedem Winkel zum Detektor ortbar ist.

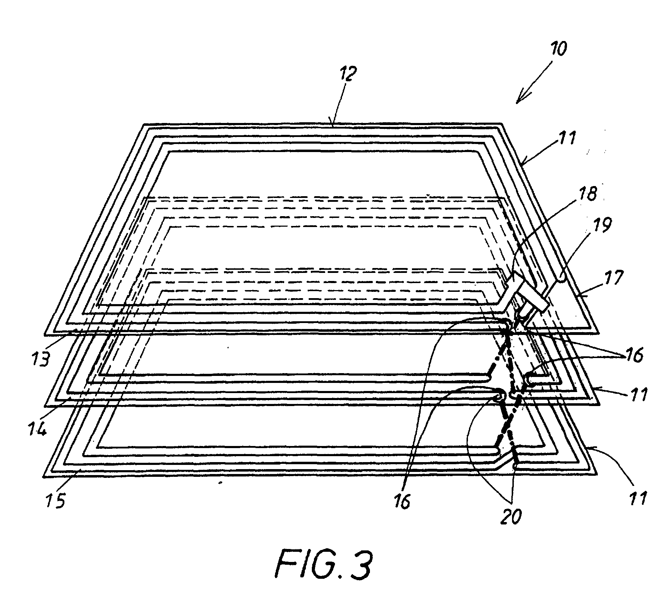

Das Ausführungsbeispiel in Fig. 2 stellt einen Alarmauslöser 10 dar, bei dem die Antennenabschnitte 13, 14, 15 in drei Ebenen auf jeweils einer Trägerschicht 11 angeordnet sind. Die einzelnen Antennenabschnitte 13, 14, 15 summieren sich auch bei dieser Ausführungsform wieder zu einer durchgehenden Antennenbahn 12, die die Form einer Spule aufweist. Die Enden 20 der einzelnen Antennenabschnitte 13, stehen an den Durchbrüchen 16 miteinander in Verbindung. Die Antennenbahn 12 ist an den Anschlußpunkten 18, 19 mit einem Kondensator 17 zu einem elektrischen Schwingkreis verbunden. Die Funktion dieses Alarmauslösers entspricht der oben, unter Fig. 1, beschriebenen.

In Fig. 3 ist ein weiteres Ausführungsbeispiel der Erfindung dargestellt. Zur besseren Verdeutlichung des Aufbaus des Alarmauslösers 10, sind die Trägerschichten 11 in dieser Fig. 3 auseinandergezogen dargestellt worden. Bei diesem Ausführungsbeispiel sind die Antennenabschnitte 13, 14, 15 wiederum in drei Ebenen angeordnet. Ein Antennenabschnitt 13 ist am Anschlußpunkt 19 mit einem Kondensator 17 verbunden. Der Antennenabschnitt 13 ist in einer Windung einer Spule auf der Trägerschicht 11 aufgebracht, und ist über einen Durchbruch 16 mit einem Antennenabschnitt 14 der zweiten Lage auf der mittleren Trägerschicht 11 verbunden. Der Antennenabschnitt 14 ist über einen Durchbruch 16 mit einem Antennenabschnitt 15 der dritten Lage verbunden. Der Antennenabschnitt 15 ist in zwei Windungen auf der unteren Trägerschicht 11 angeordnet. Über einen weiteren Durchbruch 16 in der mittleren Trägerschicht 11 ist er mit einem weiteren. auf der mittleren Trägerschicht 11 angeordneten. Antennenabschnitt 14 verbunden. Dieser Antennenabschnitt 14 ist über einen Durchbruch 16 in der oberen Trägerschicht 11 mit einem weiteren Antennenabschnitt 13 verbunden. Dieser Antennenabschnitt 13 ist in einer Windung auf der oberen Trägerschicht 11 angeordnet und ist mit dem Kondensator 17 an dem Anschlußpunkt 18 elektrisch leitend verbunden, so daß sich ein elektrischer Schwingkreis ergibt. Die Verbindungen zwischen den jeweiligen Enden 20 der Antennenabschnitte 13, 14, 15 ist durch eine gestrichelte Linie schematisch angedeutet.
Die Funktion dieses Alarmauslösers entspricht der oben, unter Fig. 1, beschriebenen.

Abschließend sei an dieser Stelle nochmals zu bemerken, daß es sich bei den dargestellten Gegenständen um Ausführungsbeispiele der Erfindung handelt, auf die die Erfindung aber nicht beschränkt ist. Insbesondere ist es so, daß das Material der Trägerschicht frei wählbar ist.
Der erfindungsgemäße Alarmauslöser kann ebenfalls auch ohne elektronische Bauteile auskommen; z.B. wenn die Antennenbahn aus einem magnetischen oder magnetisierbaren Material besteht.

### Bezugszeichenliste

- 10: Alarmauslöser
- 11: Trägerschicht
- 12: Antenne/Antennenbahn
- 13: Antennenabschnitte (1.Lage)
- 14: Antennenabschnitte (2.Lage)
- 15: Antennenabschnitte (3.Lage)
- 16: Durchbrüche
- 17: Kondensator
- 18: Anschlußpunkt
- 19: Anschlußpunkt
- 20: Enden (der Antennenabschnitte)

## Patentansprüche

1. Diebstahlsicherungs-System, insbesondere für Textilien, Lederwaren oder dergleichen, bei dem warenseitig ein Alarmauslöser (10), insbesondere ein Transponder, angebracht ist,
und das über wenigstens einen Detektor in den Ausgangsbereichen eines Verkaufsraumes eines Ladens, Kaufhauses oder dergleichen verfügt, welcher auf den Vorbeigang einer mit dem Alarmauslöser (10) versehenen Ware anspricht,
und der Alarmauslöser (10) wenigstens eine, der Detektierbarkeit dienende Antenne (12) aufweist, die auf einer Trägerschicht (11) angeordnet ist,
**dadurch gekennzeichnet, daß**
der Alarmauslöser (10) wenigstens zwei isolierende Trägerschichten (11) aufweist und die Antenne (12) aus mindestens drei einzelnen Antennenabschnitten (13, 14, 15) besteht,
daß auf jeder isolierenden Trägerschicht (11) ein oder mehrere Antennenabschnitte (13, 14, 15) angeordnet sind und die einzelnen Antennenabschnitte (13, 14, 15) der Trägerschicht (11) punktuell mit den Antennenabschnitten (13, 14, 15) der benachbarten Trägerschicht (11) elektrisch leitend verbunden sind und eine durchgehende Antennenbahn (12) großer Gesamtlänge ergeben,
wobei aufeinanderfolgende Antennenabschnitte (13, 14, 15) der durchgehenden Antennenbahn (12) jeweils auf einer benachbarten Trägerschicht (11) angeordnet sind.

2. Diebstahlsicherungssystem nach Anspruch 1, **dadurch gekennzeichnet, daß** die einzelnen Antennenabschnitte (13, 14, 15) über Durchbrüche (16) in den isolierenden Trägerschichten (11) zu einer durchgehenden Antennenbahn großer Gesamtlänge leitend miteinander verbunden sind.

3. Diebstahlsicherungssystem nach einem der Ansprüche 1 bis 2, **dadurch gekennzeichnet, daß** die Enden der Antennenbahn (12) mit einem weiteren elektronischen Bauteil, insbesondere mit einem Kondensator (17), elektrisch leitend verbunden sind und mit diesem zusammenwirken.

4. Diebstahlsicherungssystem nach einem oder mehreren der Ansprüche 1 bis 4, **dadurch gekennzeichnet, daß** die Antennenbahn (12) magnetisch ist.

5. Diebstahlsicherungssystem nach einem oder mehreren der Ansprüche 1 bis 5, **dadurch gekennzeichnet, daß** die Antennenbahn (12) magnetisierbar ist.

6. Diebstahlsicherungssystem nach einem oder mehreren der Ansprüche 1 bis 6, **dadurch gekennzeichnet, daß** die isolierende Trägerschicht (11) textiltechnisch hergestellt ist.

7. Diebstahlsicherungssystem nach einem oder mehreren der Ansprüche 1 bis 7, **dadurch gekennzeichnet, daß** die isolierende Trägerschicht (119 aus einer Folie besteht.

8. Diebstahlsicherungssystem nach einem oder mehreren der Ansprüche 1 bis 8, **dadurch gekennzeichnet, daß** die isolierende Trägerschicht (119 aus einem Film besteht.

## Claims

1. Anti-theft security system, in particular for textiles, leather articles or similar, whereby an alarm trigger (10) in particular a transponder, is attached to an article and at least one detector is disposed at the exit points from a retail area of a shop, department store or similar, which is activated when an article with an attached alarm trigger (10) passes it,
and the alarm trigger (10) has at least one antenna (12) disposed on a substrate (11) to enable detection,
**characterised in that**
the alarm trigger (10) has at least two insulating substrate layers (11) and the antenna (12) consists of at least three individual antenna portions (13, 14, 15),
**in that** one or more antenna portions (13, 14, 15) are arranged on each insulating substrate layer (11) and the individual antenna portions (13, 14, 15) of the substrate layer (11) are intermittently conductively connected to the antenna portions (13, 14, 15) of the adjacent substrate layer (11) resulting in a continuous antenna track (12) of a longer overall length,
consecutive antenna portions (13, 14, 15) of the continuous antenna track (12) respectively being arranged on an adjacent substrate layer (11).

2. Anti-theft security system as claimed in claim 1, **characterised in that** the individual antenna portions (13, 14, 15) are conductively connected to one another through orifices (16) in the insulating substrate layers (11) to form a continuous antenna track of a longer overall length.

3. Anti-theft security system as claimed in one of claims 1 to 2, **characterised in that** the ends of the antenna track (12) are conductively connected to another electronic component, in particular a capacitor (17), and co-operate therewith.

4. Anti-theft security system as claimed in one or more of claims 1 to 3, **characterised in that** the antenna track (12) is magnetic.

5. Anti-theft security system as claimed in one or more of claims 1 to 4, **characterised in that** the antenna track (12) is magnetisable.

6. Anti-theft security system as claimed in one or more of claims 1 to 5, **characterised in that** the insulating substrate layer (11) is made by a textile-related technology.

7. Anti-theft security system as claimed in one or more of claims 1 to 6, **characterised in that** the insulating substrate layer (119) is a foil.

8. Anti-theft security system as claimed in one or more of claims 1 to 7, **characterised in that** the insulating substrate layer (119) is a film.

## Revendications

1. Système de sécurité antivol, en particulier pour des textiles, des articles de cuir ou analogues, pour lequel un déclencheur d'alarme (10), en particulier un transpondeur, est monté côté marchandise,
et qui dispose d'au moins un détecteur dans les zones de sortie d'un local de vente d'un magasin, d'un grand magasin ou analogue, détecteur qui réagit au passage d'une marchandise munie du déclencheur d'alarme (10),
et le déclencheur d'alarme (10) présente au moins une antenne (12) servant d'élément produisant une détectabilité, disposé sur une couche support (11),
**caractérisé par le fait que**
le déclencheur d'alarme (10) présente au moins deux couches support (11) isolantes et l'antenne (12) est formée d'au moins trois tronçons d'antenne (13, 14, 15) individuels,
**par le fait que**, sur chaque couche support (11) isolante, sont disposés un ou plusieurs tronçons d'antenne (13, 14, 15) et les différents tronçons d'antenne (13, 14, 15) de la couche support (11) sont reliés de façon conductrice de l'électricité, ponctuellement, aux tronçons d'antenne (13, 14, 15) de la couche support (11) voisine et produisent une piste d'antenne (12) continue ayant une grande longueur globale,
où des tronçons d'antenne (13, 14, 15), se suivant, de la piste d'antenne (12) continue sont chacun disposés sur une couche support (11) voisine.

2. Système de sécurité antivol selon la revendication 1, **caractérisé par le fait que** les différents tronçons d'antenne (13, 14, 15) sont reliés ensemble de façon conductrice par des traversées (16) ménagées dans les couches support (11) isolantes, pour produire une piste d'antenne continue d'une grande longueur totale.

3. Système de sécurité antivol selon l'une des revendications 1 à 2, **caractérisé par le fait que** les extrémités de la piste d'antenne (12) sont reliées, de façon conductrice de l'électricité, à un autre composant électronique, en particulier à un condensateur (17), et coopèrent avec celui-ci.

4. Système de sécurité antivol selon l'une ou plusieurs des revendications 1 à 3, **caractérisé par le fait que** la piste d'antenne (12) est magnétique.

5. Système de sécurité antivol selon l'une ou plusieurs des revendications 1 à 4, **caractérisé par le fait que** la piste d'antenne (12) est magnétisable.

6. Système de sécurité antivol selon l'une ou plusieurs des revendications 1 à 5, **caractérisé par le fait que** la couche support isolante (11) est fabriquée par une technique textile.

7. Système de sécurité antivol selon l'une ou plusieurs des revendications 1 à 6, **caractérisé par le fait que** la couche support (11) isolante est formée d'une feuille.

8. Système de sécurité antivol selon l'une ou plusieurs des revendications 1 à 7, **caractérisé par le fait que** la couche support (11) isolante est formée d'un film.
